# EUROPÄISCHE PATENTSCHRIFT

(11) **EP 2 563 659 B1**
(45) Veröffentlichungstag und Bekanntmachung des Hinweises auf die Patenterteilung: **20.01.2016**
(21) Anmeldenummer: 11716233.9
(22) Anmeldetag: 19.04.2011
(51) Int. Cl.: B64D 11/00

(54) **BEFESTIGUNGSSYSTEM FÜR HÄNGEND MONTIERBARE DECKENCONTAINER**
FASTENING SYSTEM FOR SUSPENDED OVERHEAD STORAGE BINS
SYSTÈME DE FIXATION DE CONTENEURS DE PLAFOND POUVANT ÊTRE MONTÉS EN SUSPENSION

(30) Priorität: 27.04.2010 DE 102010016661
(43) Veröffentlichungstag der Anmeldung: 06.03.2013
(73) Patentinhaber: SFS Intec Holding AG, 9435 Heerbrugg (CH)
(72) Erfinder: COSTABEL, Sascha, 75443 Ötisheim (DE)
(86) Internationale Anmeldenummer: PCT/EP2011/056205
(87) Internationale Veröffentlichungsnummer: WO 2011/134839

(56) Entgegenhaltungen:
- WO-A1-2009/130268
- DE-A1-102006 016 509
- DE-A1-102008 025 232

## Beschreibung

Die Erfindung betrifft ein Befestigungssystem für an einer Tragstruktur hängend montierbare Deckencontainer, mit wenigstens einem Paar an der Tragstruktur bzw. an einem der Deckencontainer anbringbaren Tragösen.

Im Folgenden wird zwar ein solches Befestigungssystem bei dessen Einsatz bei der Montage von Deckencontainern wie Gepäckboxen an der Tragstruktur eines Flugzeuges beschrieben, ein solches Befestigungssystem ist jedoch überall dort einsetzbar, wo es darum geht, Deckencontainer hängend zu montieren.

Die mit der Hauptbolzenführung versehene eine Tragöse wird zwar vorzugsweise an der Tragstruktur befestigt, die Tragösen eines Paares könnten jedoch gegeneinander vertauscht werden. Bei der Kabinenentwicklung von neueren Flugzeugtypen wie zum Beispiel dem Airbus A350 wird angestrebt, an dem Flugzeugrumpf zu befestigende Elemente wie Toiletten, Bordküchen, Fluggast sitze, Kabinennetzwerke, Kabinenbeleuchtung und Luftdüsen, Deckencontainer und Hutablagen jeweils als ein komplettes Kabinenmodul zu konzipieren, wobei aber alle Verbindungsstellen als flexible standardisierte Schnittstellen ausgebildet sein sollen und wobei vereinfachte Befestigungskonzepte zum Einsatz kommen sollen, die eine Montage und Demontage ohne die Verwendung von Werkzeugen ermöglichen (vgl. den Aufsatz "Kabinenentwicklung - Neuer Ansatz für die A350 - Cabin Customisation", Zeitschrift One, deutsche Ausgabe, 18. Dezember 2006, S. 23).

Bei einem bekannten Befestigungssystem, das für die hängende Montage von Gepäckboxen in einem Flugzeug eingesetzt wird, sind für die Montage jeder Gepäckbox mehr als drei Personen erforderlich. Wenigstens drei Personen heben die Gepäckbox in eine Montageposition. Durch jeweils einen Bolzen (Losteil) werden die Tragösen jedes Paares miteinander verbunden. Für die Montage dieser Bolzen sind spezielle Werkzeuge wie Hammer, Zange usw. nötig. Weiter ermöglicht das bekannte Befestigungssystem zwar ein sicheres Befestigen der Gepäckboxen an der Tragstruktur, wobei sich das Befestigungssystem durch Leichtigkeit, gute Kräfteaufnahme, niedrige Teilepreise und eine geringe Anzahl von Bauteilen auszeichnet, jedoch stehen dem gegenüber lange Montage- und Demontagezeiten, die relativ große Zahl von Personen, die zum Montieren und Demontieren einer Gepäckbox erforderlich ist, und das Erfordernis von Werkzeug. Die losen Bolzen können verloren gehen. Diese Einschränkungen führen dazu, dass bei der Kabinenkonfiguration von Flugzeugen darauf geachtet wird, mit möglichst wenigen Varianten auszukommen. Das ist mit einer Einbuße an Flexibilität bei der Kabinenkonfiguration verbunden. Nachteilig wirkt sich auch aus, dass die Demontage aufwändig ist, da die Bolzen nur schwer und üblicherweise nur mit Spezialwerkzeug wieder gelöst werden können.

Bei einem älteren Vorschlag der Anmelderin (entsprechend dem am Prioritätsdatum der vorliegenden Anmeldung noch nicht veröffentlichten Dokument DE 10 2009 026 250 A1) geht es darum, ein Befestigungssystem so auszubilden, dass es ein schnelleres und einfacheres Montieren und Demontieren von Deckencontainern wie Gepäckboxen an einer Tragstruktur, insbesondere in Großraumflugzeugen, ermöglicht, wobei die Montage und Demontage mit zwei Personen, ohne spezielles Werkzeug und ohne lose Teile möglich sein soll.

Zu diesem Zweck ist gemäß dem älteren Vorschlag eine Bolzenführung, in welcher der Bolzen zurückgezogen, aber in Richtung einer Aufnahmehülse der Aufnahme einer der Tragösen federnd vorgespannt verriegelbar und durch wenigstens annäherndes Indeckungbringen der Aufnahmen des Tragösenpaares entriegelbar und wenigstens in eine Aufnahmehülse der Aufnahme der anderen Tragöse ausfahrbar ist, an der einen Traghülse fluchtend mit deren Aufnahmehülse angebracht.

Bei dem Befestigungssystem nach dem älteren Vorschlag befindet sich der nicht ausgefahrene Bolzen unter Federvorspannung in der Bolzenführung. Der Bolzen ist somit kein loses Teil, sondern von vornherein an einer der Tragösen des Paares unverlierbar montiert. Das ermöglicht die Montage eines Deckencontainers durch weniger Personen als im Stand der Technik, weil der Deckencontainer lediglich soweit angehoben zu werden braucht, bis die an den Tragösen angebrachten Aufnahmehülsen im Wesentlichen miteinander fluchten. Dadurch wird der Bolzen entriegelt, der dann durch die vorhandene Federvorspannung in die Aufnahmehülse der anderen Tragöse ausgefahren wird. Damit ist der Deckencontainer an der einen Tragöse bereits eingerastet. Der Bolzen kann dann später bei Bedarf manuell vollends ausgefahren und in die Aufnahmehülse der einen Tragöse eingeführt werden. Die Demontage ist in umgekehrter Reihenfolge ebenso leicht möglicht, ohne dass zum Aus- und Einfahren des Bolzens ein spezielles Werkzeug benötigt wird. Eine der Personen, die den Deckencontainer mit nach oben in die Montageposition gehoben haben, ist nach dem ersten Einrasten der anderen Tragöse an der einen Tragöse frei und kann sich dem endgültigen Ausfahren des Bolzens widmen. Das Befestigungssystem nach dem älteren Vorschlag ermöglicht somit eine einfachere Montage und Demontage von hängend montierbaren Deckencontainern wie Gepäckboxen in einem Flugzeug bei geringerem Personalaufwand. Die Sicherheit wird auch dadurch erhöht, dass keine losen Teile vorhanden sind, die verloren gehen und Störungen verursachen könnten. Gleichzeitig wird mehr Flexibilität bei der Kabinenausstattung erreicht. Das einfache Befestigungssystem nach dem älteren Vorschlag lässt viel mehr Varianten als im Stand der Technik zu.

Aus dem Dokument US 2010/0 074 673 A1 ist ein Befestigungssystem für an einer Tragstruktur hängend montierbare Deckencontainer bekannt, das eine Vorverriegelungsvorrichtung und eine Hauptverriegelungsvorrichtung umfasst. Die Vorverriegelungsvorrichtung dient während der Montage zum automatischen vorläufigen Fixieren des Deckencontainers an der Tragstruktur. Die Hauptverriegelungsvorrichtung wird anschließend wirksam, um den Deckencontainer endgültig zu fixieren. Die Vorverriegelungsvorrichtung ist unter einem Hauptbolzen der Hauptverriegelungsvorrichtung angeordnet, bei Betrachtung in Einführrichtung. Bei dem Installieren des Deckencontainers bleibt der Hauptbolzen in seiner entriegelten Position, wohingegen ein Druckteil der Vorverriegelungsvorrichtung federvorgespannt in der Verriegelungsposition ist. Der Hauptbolzen der Hauptverriegelungsvorrichtung ist im Vergleich zu dem Druckteil der Vorverriegelungsvorrichtung stärker dimensioniert, um während des Betriebes die statischen und dynamischen Kräfte aufzunehmen. Das Vorsehen einer Hauptverriegelungsvorrichtung und einer Vorverriegelungsvorrichtung macht das bekannte Befestigungssystem aufwändig.

Ein Befestigungssystem der eingangs genannten Art ist aus dem Dokument DE 10 2006 016 509 A1 bekannt. Dieses Befestigungssystem erfordert eine Montage in zwei Phasen. In der ersten Phase wird der Deckencontainer mit Eingreifelementen, die als Haken ausgebildet sind, in Lagerelemente eingehängt. In der zweiten Phase wird dann der Deckencontainer in die Befestigungsposition geschwenkt. Dabei werden zwei Bolzen in zwei Arretierelemente eingeführt und durch Einrasten und Aufrechterhalten einer Federvorspannung arretiert. Durch manuelle Betätigung kann die Arretierung wieder gelöst werden, indem ein Raststeg gegen der Federvorspannung verschoben wird.

Ein ähnliches Befestigungssystem ist aus dem Dokument DE 10 2008 025 232 A1 bekannt. Es umfasst einen Verriegelungsmechanismus zur Befestigung eines Flugzeuginnenausstattungsbauteils an einer Flugzeugstruktur, umfassend eine Führungsnut mit einer Öffnung, einen Bolzen , der mit der Führungsnut in Eingriff bringbar ist, und ein federbelastetes Verschlusselement, das in einer ersten Stellung die Öffnung der Führungsnut freigibt und in einer zweiten Stellung die Öffnung der Führungsnut verschließt. Das Verschlusselement ist dazu eingerichtet, unter der Wirkung seiner Federbelastung selbständig in die zweite Stellung zurückbewegt zu werden und die Führungsnut zu verschließen. Die Verriegelungsstellung wird dann durch die Federbelastung des Verschlusselements aufrechterhalten.

Aus dem Dokument WO 2009/130268 A1 ist ein Befestigungssystem zum Befestigen eines Elements einer Flugzeuginnenausstattung bekannt, bei dem das Innenausstattungselement zunächst an einer ersten Befestigungsvorrichtung eingehängt wird, um anschließend in seine eigentliche Befestigungsstellung verschwenkt zu werden, in der es dann durch eine zweite Befestigungsvorrichtung unter Verwendung einer zweiten Verriegelungsvorrichtung unter Federvorbelastung verriegelt wird.

Aufgabe der Erfindung ist es, ein Befestigungsssystem der eingangs genannten Art sicherer zu gestalten.

Diese Aufgabe wird gelöst durch ein Befestigungssystem mit den Merkmalen des Anspruchs 1.

Durch die formschlüssige Verriegelung des Hauptbolzens mit dem Anschlag gelangt der Hauptbolzen in eine Stellung, in welcher der Deckencontainer an der Tragstruktur gesichert befestigt ist. Erst durch manuelles Lösen der formschlüssigen Verriegelung zwischen dem Hauptbolzen und dem Zapfen wird die Befestigung wieder entsichert. Daran anschließend kann dann der Hauptbolzen wieder aus der Aufnahme herausgezogen werden, was zweckmäßig mit Hilfe eines Werkzeuges erfolgt.

Das Befestigungssystem nach der Erfindung ist, im Gegensatz zu dem Befestigungssystem nach dem oben bereits erwähnten Dokument US 2010/0 074 673 A1, mit nur einer Verriegelungsvorrichtung ausgestattet, die zugleich Vor- und Hauptverriegelungsvorrichtung ist und einen Hauptbolzen aufweist, der im Wesentlichen so wie das Druckteil der Vorverriegelungsvorrichtung dieses bekannten Befestigungssystems ausgebildet ist. Das Befestigungssystem nach der Erfindung macht somit eine der beiden Verriegelungsvorrichtungen des bekannten Befestigungssystems, nämlich die Vorrverriegelungsvorrichtung überflüssig und hat demgemäß einen wesentlich weniger aufwändigen Aufbau als das bekannte Befestigungssystem.

Das Befestigungssystem nach der Erfindung weist die gleichen Vorteile wie das Befestigungssystem nach dem älteren Vorschlag auf, die oben geschildert sind. Das Befestigungssystem nach der Erfindung ist aber einfacher als das Befestigungssystem nach dem älteren Vorschlag aufgebaut, weil der Hauptbolzen während der Aufwärtsbewegung des Deckencontainers und von dessen Tragöse nicht entriegelt zu werden braucht, denn der Hauptbolzen ist bereits ausgefahren und muss lediglich zurückgeschoben werden, bis er in die Aufnahme der anderen Tragöse unter der vorhandenen Federvorspannung selbsttätig eingefahren werden kann. Daher kommt bei dem Befestigungssystem nach der Erfindung die andere Tragöse mit einer Aufnahme aus, und das bei dem Befestigungssystem nach dem älteren Vorschlag zum Verriegeln des dort eingesetzten Bolzens vorgesehene, quer zu dem Bolzen bewegliche Sperrelement und dessen Auslösebügel entfallen. Darüber hinaus entfällt bei dem Befestigungssystem nach der Erfindung auch ein an der Hauptbolzenführung angelenkter Hebel zum manuellen Zurückziehen des Hauptbolzens in der Bolzenführung und zum Ausfahren des Bolzens bis in die Aufnahmehülse der einen Tragöse. Mit dem Befestigungssystem nach der Erfindung ist daher eine noch einfachere und schnellere Montage und Demontage mit noch weniger Hilfsmitteln möglich. Zur Demontage eines Deckencontainers, der mit dem Befestigungssystem nach der Erfindung versehen ist, braucht lediglich der in die Aufnahme eingerastete Hauptbolzen gelöst zu werden, was einfach mit Hilfe eines Werkzeuges möglich ist, das an einer Stirnseite des Hauptbolzens eingreift, um den Hauptbolzen zu lösen und nach hinten wegzuschieben.

Bei dem Befestigungssystem nach der Erfindung wird der Hauptbolzen in eine Position gebracht, die sein späteres Verriegeln in der Aufnahme der anderen Tragöse erleichtert. Das formschlüssige Verriegeln des Hauptbolzens mit dem Anschlag kann mit Hilfe eines einfachen Werkzeuges erfolgen, welches das einzige Werkzeug ist, das bei dem Einsatz des Befestigungssystems nach der Erfindung überhaupt erforderlich ist. Der bei dem älteren Vorschlag zum Einsatz kommende Hebel zum manuellen Ausfahren des Bolzens, bis sich dessen freies Ende in der Aufnahmehülse der mit der Bolzenführung versehenen einen Tragöse befindet, entfällt bei dem Befestigungssystem nach der Erfindung. Vorteilhafte Ausgestaltungen des Befestigungssystems nach der Erfindung bilden die Gegenstände der abhängigen Ansprüche.

In einer Ausgestaltung des Befestigungssystems nach der Erfindung hat die erste Tragöse wenigstens in ihrem den rampenartigen Teil umgebenden Bereich eine trichterförmige Kontur. Diese Ausgestaltung ermöglicht ein einfaches und zielgerichtetes Einführen des Hauptbolzens in die Aufnahme der anderen Tragöse.

In einer weiteren Ausgestaltung des Befestigungssystems nach der Erfindung sind der Hauptbolzen und der Zapfen mittels einer Schraubengewindeverbindung miteinander verriegelbar. In dieser Ausgestaltung braucht lediglich der Zapfen als ein Gewindestift ausgebildet und der Hauptbolzen mit einer entsprechenden Gewindebohrung versehen zu sein, um die gegenseitige Verriegelung von Hauptbolzen und Zapfen durch Drehen des Hauptbolzens zu ermöglichen. In einer weiteren Ausgestaltung des Befestigungssystems nach der Erfindung sind der Hauptbolzen und der Zapfen mittels einer Bajonettverbindung miteinander verriegelbar. Eine solche Verbindung macht Gewinde am Zapfen und am Hauptbolzen überflüssig und reduziert die Verriegelungsbewegung auf eine Drehbewegung des Hauptbolzens von beispielsweise 90° oder 180°.

In einer weiteren Ausgestaltung des Befestigungssystems nach der Erfindung weist der Hauptbolzen auf der von der ersten Tragöse abgewandten Seite einen Kraftübertragungsangriff für ein Werkzeug auf. Diese Ausgestaltung erleichtert das Drehen des Hauptbolzens zum Miteinanderverriegeln desselben mit dem Zapfen sowie das Entriegeln derselben.

In einer weiteren Ausgestaltung des Befestigungssystems nach der Erfindung weist der Hauptbolzen eine innere Längsbohrung auf, in welcher zum Erzeugen der Federvorspannung eine Schraubenfeder angeordnet ist, die sich einenends an dem Hauptbolzen und anderenends an einem Querstift abstützt, der in der Aufnahme verankert und in zwei diametral gegenüberliegenden Langlöchern des Hauptbolzens aufgenommen ist. Diese Ausgestaltung der Erfindung ermöglicht auf einfache Weise die Verschiebung und Drehung des Hauptbolzens, die für das Einrasten des Hauptbolzens in der Aufnahme der anderen Tragöse bzw. für das Verriegeln darin notwendig sind.

In einer weiteren Ausgestaltung des Befestigungssystems nach der Erfindung sind ein erstes Paar Tragösen und ein zweites Paar Tragösen an zwei benachbarten Aufhängepunkten von zwei benachbarten Deckencontainern nebeneinander anbringbar. Die Anordnung ist dabei wie bei dem älteren Vorschlag so getroffen, dass bei montierten Deckencontainern zum Beispiel der eine Deckencontainer mit dem ersten Tragösenpaar an einer Ausweichbewegung in X-, Y-, und Z-Richtung und der andere Deckencontainer mit dem zweiten Tragösenpaar an einer Ausweichbewegung in Y- und Z-Richtung gehindert ist.

In einer weiteren Ausgestaltung des Befestigungssystems nach der Erfindung sind die beiden ersten Tragösen der beiden Paare, in die die Hauptbolzen in der Montageposition ausfahrbar sind, als eine Mehrfachtragöse ausgebildet, in der mehrere Aufnahmen angeordnet sind. Die in dieser Ausgestaltung der Erfindung vorhandene Mehrfachtragöse hat einen geringeren Platzbedarf als mehrere einzelne Tragösen, so dass benachbarte Deckencontainer oder dgl. in engerem Abstand angeordnet werden können.

In einer weiteren Ausgestaltung des Befestigungssystems nach der Erfindung ist die vorgenannte Mehrfachtragöse als eine Doppeltragöse ausgebildet, in der zwei Aufnahmen Rücken an Rücken angeordnet sind. Die in dieser Ausgestaltung der Erfindung vorhandene Doppeltragöse hat einen geringeren Platzbedarf als zwei nebeneinander angeordnete einzelne Tragösen, die sonst eingesetzt werden würden, wenn zwei Deckencontainer benachbart zueinander montiert werden sollen. Mit Hilfe der Doppeltragöse lassen sich die benachbarten Deckencontainer in engerem Abstand anordnen.

In einer weiteren Ausgestaltung des Befestigungssystems nach der Erfindung sind die an der Tragstruktur hängend montierbaren Deckencontainer Gepäckboxen in einem Flugzeug.

Ausführungsbeispiele der Erfindung werden im Folgenden unter Bezugnahme auf die Zeichnungen näher beschrieben. Es zeigen:
- Fig. 1 - 4: vier Phasen der Montage eines (nur in Fig. 1 angedeuteten) Deckencontainers an einer (nur in Fig. 1 angedeuteten) Tragstruktur, wobei Fig. 1 den demontierten Zustand des Deckencontainers zeigt, Fig. 2 das Aufwärtsbewegen des Deckencontainers in Bezug auf die Tragstruktur, Fig. 3 das Erreichen der Montageposition und Fig. 4 eine gesicherte Montageposition und wobei in Fig. 2 eine obere Tragöse zur Hälfte im Schnitt gezeigt ist, um den inneren Aufbau einer Aufnahme für einen an einer Tragöse des Deckencontainers angebrachten Hauptbolzen sichtbar zu machen,
- Fig. 5: eine Schnittansicht nach der Linie V-V in Fig. 3,
- Fig. 6: eine Schnittansicht nach der Linie VI-VI in Fig. 4,
- Fig. 7: als eine Einzelheit die obere Tragöse in Fig. 2 in einer Ansicht in Richtung eines Pfeils VII in Fig. 2,
- Fig. 8: als eine Einzelheit eine Hauptbolzenführung in einer Seitenansicht,
- Fig. 9: die Hauptbolzenführung in einer Längsschnittansicht nach der Linie IX-IX in Fig. 8,
- Fig. 10: das Befestigungssystem nach Fig. 3 oder 4 in einer auseinandergezogenen Darstellung und
- Fig. 11: in einer Seitenansicht den Einsatz einer Doppeltragöse bei dem Befestigungssystem nach der Erfindung.

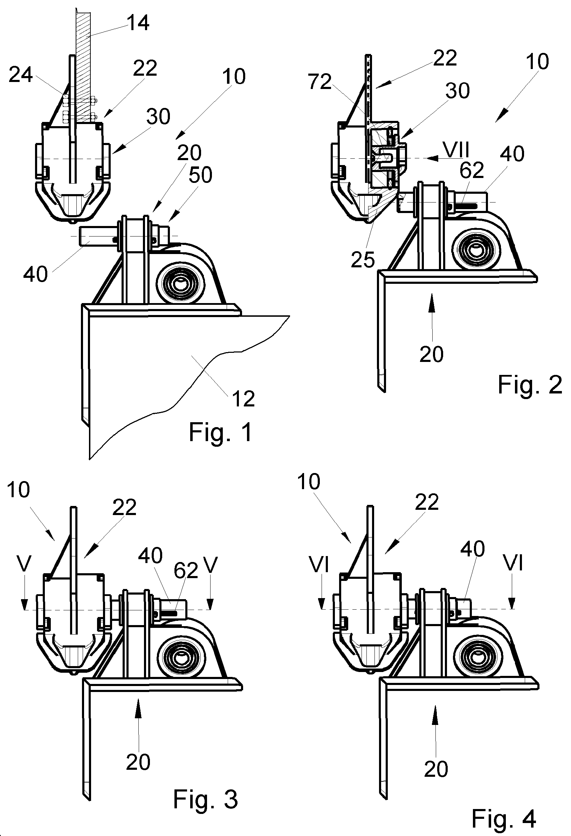

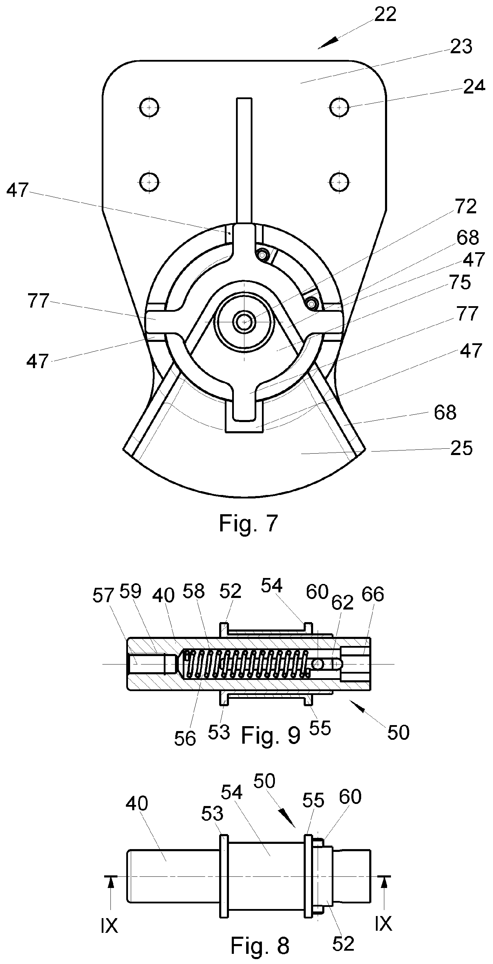

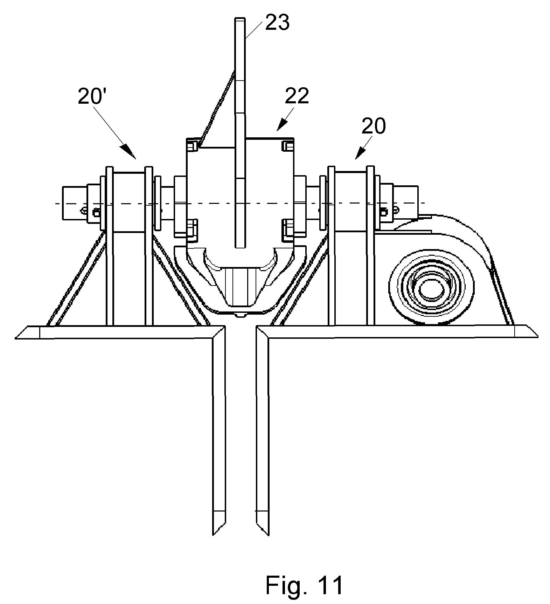

Die Fig. 1-4 zeigen ein bevorzugtes Ausführungsbeispiel eines insgesamt mit 10 bezeichneten Befestigungssystems nach der Erfindung, wobei in vier Phasen das Montieren eines nur in Fig. 1 angedeutetem Deckencontainers 12 an einer nur in Fig. 1 angedeuteten Tragstruktur 14, z.B. eines Flugzeuges, dargestellt ist. Bei dem Deckencontainer 12 kann es sich um eine Gepäckbox oder dgl. in einem Flugzeug handeln. Das Befestigungssystem 10 umfasst ein Paar Tragösen (in der Luftfahrttechnik als Brackets bezeichnet), die insgesamt mit 20 bzw. 22 bezeichnet sind. Die Tragöse 20 (in der Luftfahrttechnik als C-Bracket bezeichnet) ist an dem Deckencontainer 12 befestigt. Die Tragöse 22 ist zur Befestigung an der Tragstruktur 14 ausgebildet. Diese Befestigung ist in Fig. 1 durch zwei Schrauben mit Muttern angedeutet, welche durch Bohrungen 24 in einem Befestigungslappen 23 der Tragöse 22 (in Fig. 7 deutlicher zu erkennen) und durch entsprechende Bohrungen in der Tragstruktur 14 hindurchgeführt sind. In Fig. 2 ist die Tragöse 22 in ihrer rechten Hälfte zusätzlich im Schnitt gezeigt, um eine insgesamt mit 30 bezeichnete Aufnahme für einen an der Tragöse 20 angebrachten Hauptbolzen 40 sichtbar zu machen. Eine Tragöse, die nur den in Fig. 2 im Schnitt dargestellten rechten Teil der Tragöse 22 aufweist, wäre für den hier beschriebenen Zweck ausreichend. Eine solche Tragöse und die Tragöse 20 könnten gegeneinander vertauscht werden. In den Fig. 1-4 ist aber die Tragöse 22 als eine Doppeltragöse (in der Luftfahrttechnik als B-Bracket bezeichnet) ausgebildet, die bei der Montage von zwei benachbarten Deckencontainern 12 zum Einsatz kommt, wie es ein in Fig. 11 dargestelltes Ausführungsbeispiel zeigt, das weiter unten noch näher beschrieben wird. Das Befestigungssystem 10 ist in Fig. 1 bei demontiertem Deckencontainer gezeigt, d.h. die Tragösen 20, 22 sind nicht durch den Hauptbolzen 40 miteinander verbunden, wie es für den montierten Zustand in den Fig. 3 und 4 gezeigt ist, sondern noch voneinander getrennt. Durch den Hauptbolzen 40 sind die Tragösen 20, 22 lösbar miteinander verbindbar und dadurch ist der Deckencontainer 12 an der Tragstruktur 14 hängend montierbar. Im Folgenden werden nun die beiden Tragösen 20, 22 zunächst jeweils für sich im Einzelnen beschrieben.

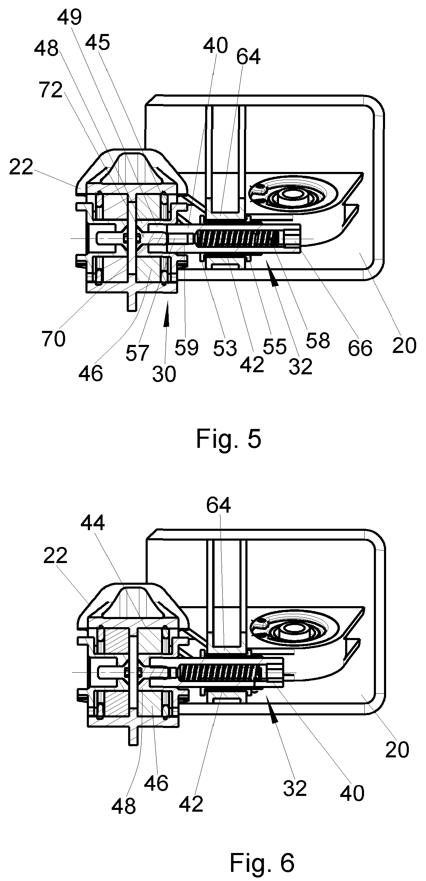

Gemäß der Darstellung in den Fig. 1-6 umfasst die Tragöse 20 ein Auge 42 als eine Aufnahme 32 für eine insgesamt mit 50 bezeichnete Hauptbolzenführung. Der Hauptbolzen 40 ist in einer Lagerbuchse 52 verschiebbar gelagert. Die Lagerbuchse 52 ist ihrerseits in einer Gleitbuchse 54 drehbar gelagert. Die Gleitbuchse 54 ist ihrerseits in dem Auge 42 befestigt. Der Hauptbolzen 40 weist eine innere Längsbohrung 56 auf, in welcher zum Erzeugen einer Federvorspannung eine Schraubenfeder 58 angeordnet ist, die sich an ihrem in Fig. 9 linken Ende an dem Hauptbolzen 40 und an ihrem anderen Ende an einem Querstift 60 abstützt. Der Querstift 60 erstreckt sich durch die Längsbohrung 56 und durch zwei einander benachbarte Langlöcher 62 des Hauptbolzens 40 sowie durch zwei Bohrungen in der Lagerbuchse 52, so dass er mit seinen beiden Enden aus der Lagerbuchse 52 hervorsteht und sich an einem Bund der Gleitbuchse 54 abstützt, wie es aus der Darstellung in den Fig. 8 und 9 zu erkennen ist. Dadurch ist eine Drehbewegung des Hauptbolzens 40 zusammen mit der Lagerbuchse 52 in der Gleitbuchse 54 möglich und überdies das Verschieben des Hauptbolzens 40 auf dem Querstift 60 in den Grenzen, die die Langlöcher 62 zulassen. Die Lagerbuchse 52 stützt sich mit einem Bund 53 an der in den Fig. 8 und 9 linken Stirnseite der Gleitbuchse 54 ab. Mit den Bunden 53 und 55 stützen sich die Buchsen 52 und 54 und somit die Bolzenführung 50 axial an einer Wand 64 des Auges 42 ab, wie es in den Fig. 5 und 6 zu erkennen ist. Der Hauptbolzen 50 weist auf seiner von der Tragöse 22 abgewandten Seite, also auf seiner in Fig. 9 rechten Seite einen Kraftübertragungsangriff 66 für ein nicht dargestelltes Werkzeug auf. Auf der in Fig. 9 linken Seite des Hauptbolzens 40 hat dessen Längsbohrung 56 einen Teil, der eine Gewindebohrung 57 kleineren Durchmessers bildet, deren Gewinde mit 59 bezeichnet ist.

Die Tragöse 22 ist ein Bauteil, das mit dem Befestigungslappen 23 an der Tragstruktur 14 lösbar befestigbar ist, wie oben bereits erwähnt. Als Aufnahme 30 für den Hauptbolzen 40 ist in einem Auge 44 der Tragöse 22 eine Stoßdämpfungsbuchse 46 angeordnet, die eine zentrisch angeordnete Buchse 48 trägt. Die Buchse 48 enthält eine Aufnahmebohrung 49, in welche der Hauptbolzen 40 einführbar ist. Die Aufnahme 30 der Tragöse 22 weist einen Anschlag 70 für den Hauptbolzen 40 auf. Der Anschlag 70 wird in dem dargestellten Ausführungsbeispiel durch eine Schraube 72 gebildet. Die Schraube 72 ist in der Buches 48 drehfest verankert. Das Gewinde der Schraube 72 entspricht dem Gewinde 59 der Gewindebohrung 57 des Hauptbolzens 40, so dass durch Drehen des Hauptbolzens 40 die Schraube 72 in die Gewindebohrung 57 einschraubbar ist. Bis dahin bildet die Schraube 72 den Anschlag 70, an welchem der Hauptbolzen 40 bei seiner Ausfahrbewegung aus der Hauptbolzenführung 50 aufgrund der Vorspannung der Feder 58 in Anlage kommt, wie es in Fig. 5 gezeigt ist.

Für das Verständnis der bis hierher beschriebenen Erfindung ist lediglich die rechte Hälfte der in den Fig. 5 und 6 im Schnitt gezeigten Tragöse 22 von Interesse. Die gegenüberliegende linke Hälfte ist spiegelbildlich gleich ausgebildet, wenn die Tragöse 22, wie dargestellt, als eine Doppeltragöse für einen Einsatz wie in Fig. 11 ausgebildet ist.

Gemäß der Darstellung in Fig. 2 ist ein Teil 25 der Tragöse 22 nach Art einer schrägen Rampe ausgebildet. Während der Aufwärtsbewegung des Deckencontainers 12 aus der in Fig. 1 gezeigten Stellung wird durch den rampenartigen Teil 25 der Hauptbolzen 40 in Fig. 2 nach rechts verschoben, während die ihm zugeordnete Tragöse 20 aufwärts in die Montageposition bewegt wird, die in den Fig. 3 und 4 gezeigt ist. Sobald der Hauptbolzen 40 diese Position erreicht, in welcher seine Achse in der Achse der Aufnahme 30 liegt, wird er aus der Tragöse 20 durch die Vorspannung der Schraubenfeder 58 in die Aufnahme 30 der Tragöse 22 ausgefahren, und zwar bis in die Stellung nach den Fig. 3 und 5, in welcher der Hauptbolzen an dem Anschlag 70 anliegt.

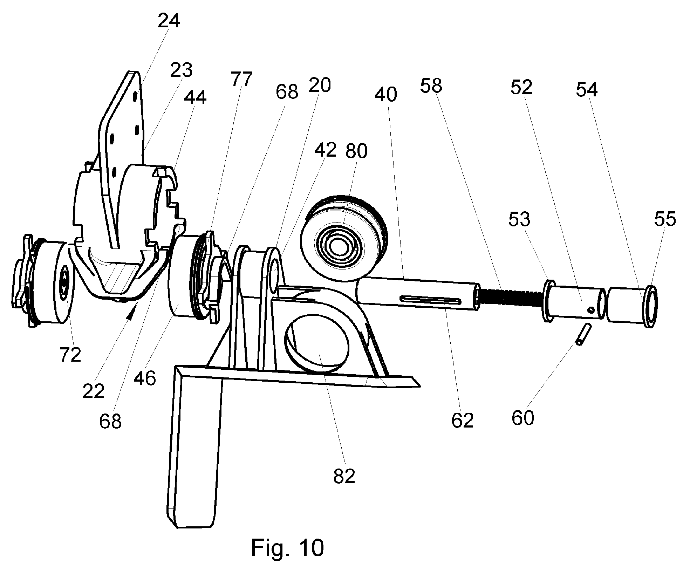

Die Tragöse 22 hat wenigstens in ihrem den rampenartigen Teil 25 umgebenden Bereich eine trichterförmige Kontur 68, wobei in dem hier dargestellten Ausführungsbeispiel die trichterförmige Kontur 68 auch in weiteren Bereichen der Tragöse 22 vorhanden ist, wie es in den Fig. 7 und 10 zu erkennen ist. Die trichterförmige Kontur 68 führt den Hauptbolzen 40 zu dem Anschlag 70, an welchem er zuerst in Anlage gebracht und dann fixiert werden soll. Die Tragöse 22 ist zudem mit Nuten 47 versehen, welche zur Momentenabstützung der Stoßdämpfungsbuchse 46, also als Verdrehschutz dienen. Ein Sicherungsring 45 verhindert ein Herausfallen der Stoßdämpfungsbuchse 46 aus dem Auge 44. Ein Innenring 75 führt die Kontur der Tragöse 22 fort, um ein einfaches und zielgerichtetes Einführen des Hauptbolzens 40 zu ermöglichen. Der Innenring 75 besitzt Zapfen 77, welche in den Nuten 47 der Tragöse 22 sitzen und der Momentenabstützung der Stoßdämpfungsbuchse 46, also als Verdrehschutz dienen.

Durch manuelle Betätigung eines Werkzeuges, das in den Kraftübertragungsangriff 66 eingeführt wird, ist der Hauptbolzen 40 an dem Anschlag 70 formschlüssig verriegelbar. In dem hier beschriebenen Ausführungsbeispiel sind der Hauptbolzen 40 und der Zapfen 70 mittels einer Schraubengewindeverbindung miteinander verriegelbar. Stattdessen können der Hauptbolzen und der Zapfen auch mittels einer Bajonettverbindung (nicht dargestellt) miteinander verriegelt werden. Durch das Herstellen der Gewinde- oder Bajonettverbindung zwischen dem Zapfen 70 und dem Hauptbolzen 40 gelangt der Hauptbolzen in die in den Fig. 4 und 6 gezeigte Stellung, in welcher der Deckencontainer 12 an der Tragstruktur 14 gesichert befestigt ist. Erst durch Lösen der Gewinde- oder Bajonettverbindung zwischen dem Hauptbolzen 40 und dem Zapfen 70 wird die Befestigung wieder entsichert. Sobald der Hauptbolzen die in Fig. 5 gezeigte Stellung wieder erreicht hat, kann er aus der Aufnahme 30 herausgezogen werden, was zweckmäßig mit Hilfe eines an seinem rechten Ende dafür eingesetzten Werkzeuges erfolgt.

In dem Ausführungsbeispiel nach Fig. 11 ist statt zwei nebeneinander angeordneten Tragösen nur eine Tragöse 22 vorgesehen, die als Doppeltragöse ausgebildet ist und den oben bereits beschriebenen Aufbau hat. In den Augen 44 der Doppeltragöse sind die beiden Aufnahmen 30 Rücken an Rücken angeordnet, wie es in den Fig. 5 und 6 zu erkennen ist.

Anhand der Darstellung in den Fig. 1-11 werden nun die Montage und die Demontage des Deckencontainers 12 zusammenfassend dargestellt.

Fig. 1 zeigt Ausgangspositionen der Tragösen 20 und 22. In der Ausgangsposition der Tragöse 20 ist der Hauptbolzen 40 aus der Hauptbolzenführung 50 in eine Endstellung ausgefahren, die in Fig. 1 gezeigt ist. In dieser Stellung ist der Hauptbolzen 40 durch die Schraubenfeder 58 in Ausfahrrichtung vorgespannt.

Wenigstens drei Personen oder eine Person, die sich einer Hubvorrichtung bedient, heben nun den Deckencontainer 12 weiter an, bis der Hauptbolzen 40 an den rampenartigen Teil 25 gelangt und mit zunehmender Aufwärtsbewegung des Deckencontainers 12 in Fig. 2 zunehmend nach rechts verschoben wird. Sobald die Tragöse 20 die in Fig. 3 gezeigte Montageposition erreicht, in welcher die Längsachse des Hauptbolzens 40 und die Längsachse der Aufnahme 30 der Tragöse 22 in einer Linie sind, drückt die Schraubenfeder 58, die bis zu dem Erreichen dieser Stellung zunehmend gespannt worden ist, den Hauptbolzen 40, der in die Aufnahme 30 eintritt, gegen den Anschlag 70, so dass der Hauptbolzen 40 die in Fig. 5 gezeigte Stellung einnimmt. Durch Drehen des Hauptbolzens 40 um seine Längsachse wird er auf die den Anschlag 70 bildende Schraube 72 aufgeschraubt, wodurch der Hauptbolzen 40 schließlich in die in Fig. 6 gezeigte Stellung gelangt, in welcher das Befestigungssystem 10 gesichert ist. Sobald der Hauptbolzen 40 die in den Fig. 3 und 5 gezeigte Stellung erreicht, ist der Deckencontainer 12 an der Tragöse 22 bereits vorläufig eingerastet, so dass wenigstens eine der Personen, die den Deckencontainer 12 in die Montageposition angehoben haben, frei ist, um mit Hilfe eines Werkzeuges, das in den Kraftübertragungsangriff 66 eingeführt wird, den Hauptbolzen 40 zu drehen, bis der Hauptbolzen 40 und damit der Deckencontainer 12 in der Montageposition nach den Fig. 4 und 6 endgültig gesichert ist.

Zum Demontieren des Deckencontainers 12 wird der Hauptbolzen 40 in umgekehrter Richtung gedreht, bis er wieder die Stellung nach den Fig. 3 und 5 erreicht hat, in welcher das Befestigungssystem 10 entsichert ist. Der Hauptbolzen 40 kann nun manuell aus der Aufnahme 30 der Tragöse 22 herausgezogen und der Deckencontainer 12 dann wieder abgesenkt werden.

In der Darstellung in Fig. 11 sind eine rechte Tragöse 20 und eine linke Tragöse 20' an zwei benachbarten Deckencontainern 12 an einer an der Tragstruktur 14 befestigten Doppeltragöse 22 nebeneinander angebracht, wobei in Fig. 11 jeweils der montierte und gesicherte Zustand wie in den Fig. 4 und 6 gezeigt ist. Eine in den Figuren zusätzlich dargestellte und in Fig. 10 mit 80 bezeichnete weitere Stoßdämpfungsbuchse, die in einem weiteren Auge 82 der Tragöse 20 befestigt ist, ist nicht Teil der Erfindung. Der Vollständigkeit halber sei lediglich erwähnt, dass die Stoßdämpfungsbuchse 80 in X-Richtung auftretende Kräfte aufnimmt und diese weiterleitet, zum Beispiel über eine nicht dargestellte Spannstrebe, welche direkt mit der Tragstruktur 14 verbunden ist.

Abschließend sei festgehalten, dass nicht nur die Tragösen 20, 20', 22, sondern auch alle Teile derselben von Tragöse zu Tragöse gegeneinander austauschbar sind, so könnte also z.B. die Hauptbolzenführung 50 an der Tragöse 22 statt an der Tragöse 20 angebracht sein und die Aufnahme 30 für den Hauptbolzen 40 und der rampenartige Teil 25 könnten an der Tragöse 20 statt an der Tragöse 22 angebracht sein.

### Bezugszeichenliste

- 10: Befestigungssystem
- 12: Deckencontainer
- 14: Tragstruktur
- 20: Tragöse
- 22: Tragöse
- 23: Befestigungslappen
- 24: Bohrung
- 25: rampenartiger Teil
- 30: Aufnahme
- 32: Aufnahme
- 40: Hauptbolzen
- 42: Auge
- 44: Auge
- 45: Sicherungsring
- 46: Stoßdämpfungsbuchse
- 47: Nut
- 48: Buchse
- 49: Aufnahmebohrung
- 50: Hauptbolzenführung
- 52: Lagerbuchse
- 53: Bund
- 54: Gleitbuchse
- 56: Längsbohrung
- 57: Gewindebohrung
- 58: Schraubenfeder
- 59: Gewinde
- 60: Querstift
- 62: Langloch
- 64: Wand
- 66: Kraftübertragungsangriff
- 68: trichterförmige Kontur
- 70: Anschlag
- 72: Schraube
- 75: Innenring
- 77: Zapfen
- 80: Stoßdämpfungsbuchse
- 82: Auge

## Patentansprüche

1. Befestigungssystem für an einer Tragstruktur hängend montierbare Deckencontainer,
mit wenigstens einem Paar an der Tragstruktur (14) bzw. an einem der Deckencontainer (12) anbringbaren Tragösen (20, 22),
mit einem Hauptbolzen (40) zum lösbaren Miteinanderverbinden der Tragösen (20, 22) und
mit an den Tragösen (20, 22) angebrachten Aufnahmen (30, 32) für den Hauptbolzen (40), die in einer Montageposition des Deckencontainers (12) miteinander fluchten,
wobei ein Teil (25) einer ersten Tragöse (22) nach Art einer schrägen Rampe ausgebildet ist,
wobei in der Aufnahme (32) einer zweiten Tragöse (20) eine Hauptbolzenführung (50) angebracht ist,
wobei der Hauptbolzen (40) in der Hauptbolzenführung (50) in Richtung der ersten Tragöse (22) federnd vorgespannt ist und bei noch nicht montiertem Deckencontainer (12) eine Endstellung einnimmt, in welcher der Hauptbolzen (40) aus der Hauptbolzenführung (50) ausgefahren ist,
und
wobei durch den nach Art einer schrägen Rampe ausgebildeten Teil (25) der ersten Tragöse der Hauptbolzen (40) während der Aufwärtsbewegung des Deckencontainers (12) und von dessen Tragöse in die Montageposition durch die Federvorspannung in die Aufnahme (30) der ersten Tragöse ausfahrbar ist,
wobei die Aufnahme (30) der ersten Tragöse (22) einen Anschlag (70) aufweist, an welchem der Hauptbolzen (40) bei seiner Ausfahrbewegung aufgrund der Federvorspannung in Anlage bringbar ist, und wobei der Hauptbolzen (40) mit dem Anschlag (70) durch manuelle Betätigung formschlüssig verriegelbar ist, **dadurch gekennzeichnet, dass** der Anschlag (70) ein in der Aufnahme (30) der ersten Tragöse (22) zentral angeordneter Zapfen ist und der Hauptbolzen (40) eine komplementär ausgebildete Bohrung (57) aufweist, in welcher der Zapfen (70) aufnehmbar ist.

2. Befestigungssystem nach Anspruch 1, **dadurch gekennzeichnet, dass** die erste Tragöse (22) wenigstens in ihrem den rampenartigen Teil (25) umgebenden Bereich eine trichterförmige Kontur hat.

3. Befestigungssystem nach Anspruch 1 oder 2, **dadurch gekennzeichnet, dass** der Hauptbolzen (40) und der Zapfen mittels einer Schraubengewindeverbindung miteinander verriegelbar sind.

4. Befestigungssystem nach Anspruch 1 oder 2, **dadurch gekennzeichnet, dass** der Hauptbolzen (40) und der Zapfen mittels einer Bajonettverbindung miteinander verriegelbar sind.

5. Befestigungssystem nach einem der Ansprüche 1 bis 4, **dadurch gekennzeichnet, dass** der Hauptbolzen (40) auf der von der ersten Tragöse (22) abgewandten Seite einen Kraftübertragungsangriff (66) für ein Werkzeug aufweist.

6. Befestigungssystem nach einem der vorhergehenden Ansprüche, **dadurch gekennzeichnet, dass** der Hauptbolzen (40) eine innere Längsbohrung (56) aufweist, in welcher zum Erzeugen der Federvorspannung eine Schraubenfeder (58) angeordnet ist, die sich einenends an dem Hauptbolzen (40) und anderenends an einem Querstift (60) abstützt, der in der Aufnahme (32) verankert ist und in zwei einander benachbarten Langlöchern (62) des Hauptbolzens (40) verschiebbar aufgenommen ist.

7. Befestigungssystem nach einem der vorhergehenden Ansprüche, **dadurch gekennzeichnet, dass** ein erstes Paar Tragösen (20, 22) und ein zweites Paar Tragösen (20, 22) an zwei benachbarten Aufhängepunkten von zwei benachbarten Deckencontainern (12) nebeneinander anbringbar sind.

8. Befestigungssystem nach Anspruch 7, **dadurch gekennzeichnet, dass** die beiden ersten Tragösen der beiden Paare, in die die Hauptbolzen (40) in der Montageposition ausfahrbar sind, als eine Mehrfachtragöse ausgebildet sind, in der mehrere Aufnahmen angeordnet sind.

9. Befestigungssystem nach Anspruch 8, **dadurch gekennzeichnet, dass** die Mehrfachtragöse als eine Doppeltragöse (22) ausgebildet ist, in der zwei Aufnahmen (30) Rücken an Rücken angeordnet sind.

10. Befestigungssystem nach einem der vorhergehenden Ansprüche, **dadurch gekennzeichnet, dass** die an der Tragstruktur (14) hängend montierbaren Deckencontainer (12) Gepäckboxen in einem Flugzeug sind.

## Claims

1. Fastening system for overhead bins that can be mounted on a support structure in a suspended manner,
comprising at least one pair of lifting lugs (20, 22) which are attachable to the support structure (14) or to one of the overhead bins (12),
comprising a main bolt (40) for detachably interconnecting the lifting lugs (20, 22), and receptacles (30, 32), for the main bolt (40), which are attached to the lifting lugs (20, 22) and align with each other when the overhead bin is mounted,
part (25) of a first lifting lug (22) being formed as an inclined ramp,
a main bolt guide (50) being attached in the receptacle (32) of a second lifting lug (20),
the main bolt (40) being biased by means of a spring in the main bolt guide (50) towards the first lifting lug (22) and, when the overhead bin (12) is not yet mounted, assuming an end position in which the main bolt (40) is extended out of the main bolt guide (50) and, due to the part (25) of the first lifting lug formed as an inclined ramp, the main bolt (40) being extendable from the lifting lug of the overhead bin (12) into the receptacle (30) of the first lifting lug as a result of the spring bias as said bin moves upwards,
the receptacle (30) of the first lifting lug (22) comprising a stop (70) with which the main bolt (40) can be brought into contact, as a result of the spring bias, as said bolt extends, and the main bolt (40) being lockable to the stop (70) in a positive-fit manner by means of manual activation, **characterised in that** the stop (70) is a pin arranged in the centre of the receptacle (30) of the first lifting lug (22) and the main bolt (40) has a complementary hole (57) in which the pin (70) can be received.

2. Fastening system according to claim 1, **characterised in that** the first lifting lug (22) has a funnel-shaped contour at least in the region thereof which surrounds the ramp-like part (25).

3. Fastening system according to either claim 1 or claim 2, **characterised in that** the main bolt (40) and the pin are lockable to one another by means of a screw-thread connection.

4. Fastening system according to either claim 1 or claim 2, **characterised in that** the main bolt (40) and the pin are lockable to one another by means of a bayonet connection.

5. Fastening system according to any of claims 1 to 4, **characterised in that** the side of the main bolt (40) facing away from the first lifting lug (22) comprises a force-transmission point (66) for a tool.

6. Fastening system according to any of the preceding claims, **characterised in that** the main bolt (40) has an inner longitudinal hole (56) in which a helical spring (58) is arranged for generating the spring bias, one end of which spring is supported on the main bolt (40) and the other end of which is supported on a transverse pin (60) which is anchored in the receptacle (32) and is movably retained in two adjacent elongate holes (62) of the main bolt (40).

7. Fastening system according to any of the preceding claims, **characterised in that** a first pair of lifting lugs (20, 22) and a second pair of lifting lugs (20, 22) are attachable next to one another to two adjacent suspension points of two adjacent overhead bins (12).

8. Fastening system according to claim 7, **characterised in that** the two first lifting lugs of the two pairs thereof, into which the main bolts (40) can be extended when in the mounted position, are formed as a compound lifting lug in which a plurality of receptacles are arranged.

9. Fastening system according to claim 8, **characterised in that** the compound lifting lug is formed as a double lifting lug (22) in which two receptacles (30) are arranged back-to-back.

10. Fastening system according to any of the preceding claims, **characterised in that** the overhead bins (12) which can be mounted on the support structure (14) in a suspended manner are luggage containers in an aircraft.

## Revendications

1. Système de fixation pour un réceptacle de plafond pouvant être monté suspendu sur une structure support comprenant :
au moins une paire d'oeillets de suspension (20, 22) pouvant être montés sur la structure support (14) ou sur l'un des réceptacles de plafond (12),
un goujon principal (40) permettant la liaison amovible des oeillets de suspension (20, 22), et
des logements de réception (30, 32) du goujon principal (40) situés sur les oeillets de suspension (20, 22) et qui sont alignés dans la position de montage du réceptacle de plafond (12),
une partie (25) d'un premier oeillet de suspension (22) étant réalisée sous la forme d'une rampe inclinée,
un élément de guidage du goujon principal (50) étant positionné dans le logement de réception (32) du second oeillet de suspension (20),
le goujon principal (40) étant précontraint élastiquement dans l'élément de guidage du goujon principal (50) dans la direction du premier oeillet de suspension (22), et prenant, lorsque le réceptacle de plafond (12) n'est pas encore monté une position finale dans laquelle le goujon principal (40) est déployé hors de l'élément de guidage du goujon principal (50), et
du fait de la configuration de la partie (25) du premier oeillet de suspension réalisé sous la forme d'une rampe inclinée, le goujon principal (40) peut pendant le déplacement vers l'avant du réceptacle de plafond (12) et par son oeillet de suspension dans la position de montage être déployé par la précontrainte élastique dans le logement de réception (30) du premier oeillet de suspension,
le logement de réception (30) du premier oeillet de suspension (22) comprenant une butée (70), contre laquelle peut être appliqué le goujon principal (40) lors de son déploiement sous l'action de la précontrainte élastique, et le goujon principal (40) pouvant être verrouillé par une liaison par la forme avec la butée (70) par déplacement manuel,
**caractérisé en ce que**
la butée (70) est un tourillon monté dans le logement de réception (30) du premier oeillet de suspension (22) au centre de ce logement et le goujon principal (40) comprend un orifice (57) complémentaire dans lequel peut venir le tourillon (70).

2. Système de fixation conforme à la revendication 1,
**caractérisé en ce que**
le premier oeillet de suspension (22) a un contour en forme d'entonnoir au moins dans sa zone entourant la partie en forme de rampe (25).

3. Système de fixation conforme à la revendication 1 ou 2,
**caractérisé en ce que**
le goujon principal (40) et le tourillon peuvent être bloqué l'un avec l'autre au moyen d'une liaison par filetage.

4. Système de fixation conforme à la revendication 1 ou 2,
**caractérisé en ce que**
le goujon principal (40) et le tourillon peuvent être bloqués l'un avec l'autre au moyen d'une liaison à baïonnette.

5. Système de fixation conforme à l'une des revendications 1 à 4, **caractérisé en ce que**
le goujon principal (40) comporte, sur sa face située à l'opposé du premier oeillet de suspension (22) une prise de transfert de force (66) pour un outil.

6. Système de fixation conforme à l'une des revendications précédentes,
**caractérisé en ce que**
le goujon principal (40) comporte un perçage longitudinal (56) dans lequel, pour permettre d'obtenir la précontrainte élastique est monté un ressort hélicoïdal (58) qui s'appuie par une extrémité sur le goujon principal (40) et par son autre extrémité sur une broche transversale (60) qui est ancrée dans le logement de réception (32) et est logée mobile en translation dans deux trous longitudinaux (62) voisins du goujon principal (40).

7. Système de fixation conforme à l'une des revendications précédentes,
**caractérisé en ce qu'**
une première paire d'oeillets de suspension (20, 22) et une seconde paire d'oeillets de suspension (20, 22) peuvent être montées côte à côte au niveau de deux points de suspension voisins de deux réceptacles de plafond (12) voisins.

8. Système de fixation conforme à la revendication 7,
**caractérisé en ce que**
les deux premiers oeillets de suspension des deux paires dans lesquels peuvent être déployés les goujons principaux (40) dans la position de montage sont réalisés sous la forme d'un oeillet de suspension multiple dans lequel sont positionnés plusieurs logements de réception.

9. Système de fixation conforme à la revendication 8,
**caractérisé en ce que**
l'oeillet de suspension multiple est réalisé sous la forme d'un oeillet de suspension double (22) dans lequel deux logements de réception (30), sont positionnés dos à dos.

10. Système de fixation conforme à l'une des revendications précédentes,
**caractérisé en ce que**
les réceptacles de plafond (12) pouvant être montés suspendus sur la structure support (14) sont des compartiments à bagages d'un avion.
